# FASCICULE DE BREVET EUROPEEN

(11) **EP 2 978 658 B1**
(45) Date de publication et mention de la délivrance du brevet: **19.07.2017**
(21) Numéro de dépôt: 14708635.9
(22) Date de dépôt: 14.02.2014
(51) Int. Cl.: B62D 25/20, B60K 15/063, F01N 3/20, B62D 21/15

(54) **ENSEMBLE POUR CHÂSSIS COMPORTANT UN RÉSERVOIR DE STOCKAGE D'UN AGENT DE DÉPOLLUTION ET VÉHICULE AUTOMOBILE CORRESPONDANT**
ANORDNUNG FÜR EIN FAHRGESTELL MIT EINEM BEHÄLTER ZUR LAGERUNG EINES SCHADSTOFFENTFERNUNGSMITTELS UND ENTSPRECHENDES KRAFTFAHRZEUG
ASSEMBLY FOR A CHASSIS COMPRISING A TANK FOR STORING A POLLUTANT REMOVAL AGENT AND CORRESPONDING MOTOR VEHICLE

(30) Priorité: 25.03.2013 FR 1352658
(43) Date de publication de la demande: 03.02.2016
(73) Titulaire: Peugeot Citroën Automobiles SA, 78140 Vélizy Villacoublay (FR)
(72) Inventeur: HENRY, Olivier, F-25400 Taillecourt (FR); CONVERS, Germain, F-25200 Bethoncourt (FR)
(74) Mandataire: Renous Chan, Véronique
(86) Numéro de dépôt international: PCT/FR2014/050298
(87) Numéro de publication internationale: WO 2014/154959

(56) Documents cités:
- WO-A1-2011/121202
- WO-A1-2012/086297
- JP-A- 2008 150 042
- JP-A- 2008 265 689
- US-A1- 2004 099 465

## Description

L'invention porte sur un ensemble pour châssis comportant un réservoir de stockage d'un agent de dépollution ainsi que sur le véhicule automobile correspondant.

Les véhicules thermiques sont soumis à des normes de dépollution contraignantes visant à limiter les émissions de polluants, tels que les oxydes d'azote. Afin de respecter ces réglementations, il est possible de développer des modes d'hybridation de la traction combinant l'utilisation d'énergies thermique et électrique et/ou de traiter les polluants après leur émission au moyen de systèmes dit de post-traitement.

On connaît ainsi des systèmes de post-traitement des oxydes d'azote dits systèmes SCR pour "Selective Catalytic Reduction" en anglais. Ces systèmes permettent de réduire chimiquement les oxydes d'azote en ajoutant dans la ligne d'échappement un agent réducteur, par exemple de l'ammoniac, en amont d'un catalyseur spécifique.

Le véhicule comporte à cet effet un réservoir contenant un agent de dépollution en complément du réservoir de carburant. De façon connue en soi, le réservoir de carburant est implanté sous la partie avant du plancher du véhicule dite de rang deux destinée à être positionnée sous les sièges des passagers arrière du véhicule; tandis que le réservoir stockant l'agent de dépollution est implanté sous une zone arrière appelée également plancher de charge correspondant à une zone de coffre du véhicule.

Ainsi, le document JP2008 265689 divulgue un ensemble pour châssis de véhicule automobile comportant un plancher ayant une zone avant formée par une première partie destinée à être située sous un siège d'un conducteur et un siège d'un passager avant du véhicule et une deuxième partie destinée à être située sous des sièges de passagers arrière du véhicule, ainsi qu'un réservoir comportant un premier compartiment délimitant un volume creux pour le stockage d'un agent de dépollution.

L'agent de dépollution stocké par exemple sous forme liquide est acheminé depuis l'arrière véhicule vers l'avant au moyen d'une canalisation associée à un câble électrique jouant un rôle de résistance électrique apte à réchauffer l'agent de dépollution qui est sensible aux basses températures. Toutefois, l'utilisation de plateformes modulaires implique une diversité des longueurs de canalisations due à un empattement variable d'un véhicule à l'autre, ce qui complexifie l'assemblage de l'ensemble.

En outre, dans le cas où un autre élément tel qu'un silencieux d'échappement est installé sous le plancher de charge, le réservoir stockant l'agent de dépollution ne présente pas un volume suffisant pour atteindre des prestations cibles en termes d'autonomie de fonctionnement.

L'invention vise à remédier à ces inconvénients en proposant un ensemble pour châssis de véhicule automobile comportant un plancher ayant une zone avant formée par une première partie destinée à être située sous un siège d'un conducteur et un siège d'un passager avant du véhicule et une deuxième partie destinée à être située sous des sièges de passagers arrière du véhicule, ainsi qu'un réservoir comportant un premier compartiment délimitant un volume creux pour le stockage d'un agent de dépollution, caractérisé en ce que ledit premier compartiment du réservoir est disposé dans la zone avant du plancher au moins partiellement dans une zone latérale déformable en cas de choc du véhicule.

L'implantation du réservoir sous le plancher avant qui présente une longueur sensiblement constante d'un type de véhicule à l'autre permet ainsi de supprimer la diversité de canalisations en cas d'utilisation d'une plateforme modulaire. En outre, la disposition du réservoir dans la zone latérale déformable en cas de choc qui est une zone actuellement inexploitée permet d'augmenter le volume du compartiment de stockage de l'agent de dépollution afin d'améliorer l'autonomie de fonctionnement du système de dépollution, de préférence de type SCR.

Selon une réalisation, la zone latérale déformable est une zone déformable en cas de choc poteau.

Selon une réalisation, le réservoir comporte également un deuxième compartiment délimitant un volume creux pour le stockage de carburant formant une seule et même pièce avec le premier compartiment de stockage.

Selon une réalisation, le deuxième compartiment de stockage de carburant est positionné dans la zone avant du plancher.

Selon une réalisation, le deuxième compartiment de stockage de carburant est positionné à l'extérieur de la zone latérale déformable en cas de choc du véhicule.

Selon une réalisation, le réservoir comporte une zone de jonction étanche entre les deux compartiments de stockage du réservoir.

Selon une réalisation, chaque compartiment de stockage du réservoir intègre un module jauge-pompe.

Selon une réalisation, le réservoir comporte des pattes de fixation avec le plancher du véhicule automobile.

Selon une réalisation, les pattes de fixation sont disposées dans des creux ménagés dans le réservoir dans des zones où il existe une contrainte d'espace imposée par le plancher du véhicule.

Selon une réalisation, les pattes de fixation présentent une forme en saillie dans des zones où il n'existe pas de contrainte d'espace imposée par le plancher du véhicule.

L'invention a également pour objet un véhicule automobile comportant un ensemble pour châssis selon l'invention.

L'invention sera mieux comprise à la lecture de la description qui suit et à l'examen des figures qui l'accompagnent. Ces figures ne sont données qu'à titre illustratif mais nullement limitatif de l'invention.
La figure 1 est une représentation schématique d'un premier mode de réalisation de l'invention basé sur l'utilisation d'un réservoir double.
Les figures 2a à 2c sont respectivement des vues en perspective, de dessus, et en coupe suivant un plan transversale A-A de la figure 2b d'un réservoir double selon l'invention.
La figure 3 est une représentation schématique d'un deuxième mode de réalisation de l'invention basé sur l'utilisation de deux réservoirs indépendants.
La figure 4 est une vue en perspective des moyens d'assemblage entre le réservoir double du premier mode de réalisation de l'invention représenté en transparence et le plancher du véhicule.

Les éléments identiques, similaires ou analogues conservent la même référence d'une figure à l'autre.

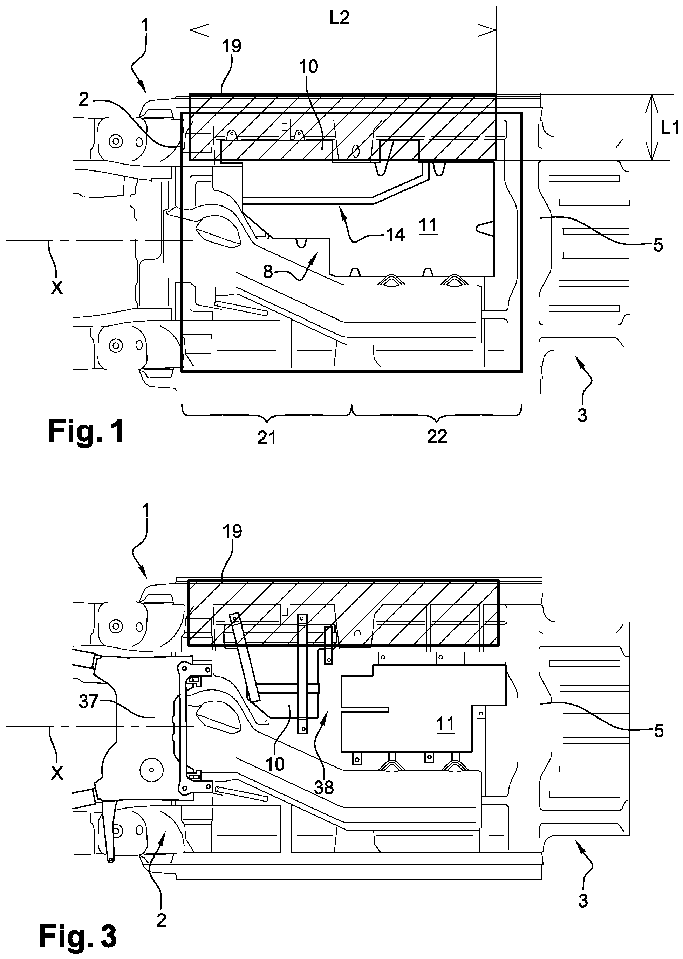

La figure 1 montre un plancher 1 d'un véhicule s'étendant suivant un axe longitudinal X ayant une zone avant située du côté d'un train avant du véhicule correspondant sensiblement à la zone 2 délimitée par le rectangle. Cette zone avant 2 est formée par une première partie 21 dite de rang un destinée à être située sous le siège du conducteur et du passager avant et une deuxième partie 22 dite de rang deux destinée à être située sous les sièges des passagers arrière du véhicule. Le plancher 1 comporte également une zone arrière 3 représentée partiellement destinée à former le fond du coffre et le cas échant, pour les véhicules longs, à être positionnée sous des sièges d'une troisième rangée de passagers. La zone avant 2 formée par exemple à partir de deux tôles (une pour chaque partie 21, 22) et la zone arrière 3 formée à partir d'une troisième tôle sont assemblées au moyen d'une traverse 5 globalement en forme de U.

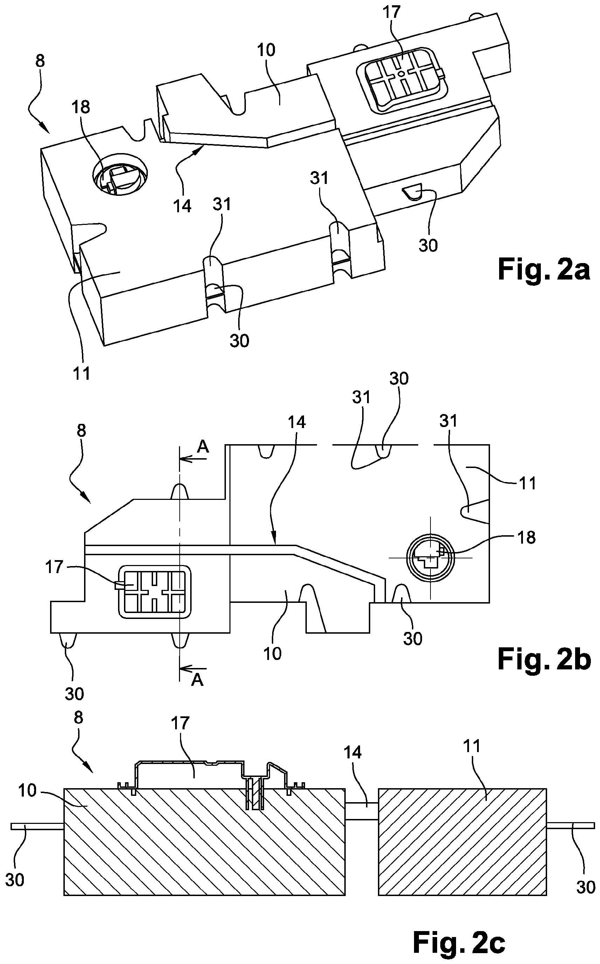

Un réservoir 8 est implanté sous le plancher 1 du véhicule, c'est-à-dire sur la face du plancher 1 destinée à être tournée vers la route. Comme cela est bien visible sur les figures 2a à 2c, le réservoir 8 comporte un premier compartiment 10 délimitant un volume creux pour le stockage d'un agent de dépollution. Cet agent de dépollution, comme par exemple de l'ammoniac, est destiné par exemple à être utilisé avec un système de type SCR (Selective Catalytic Réduction). Il peut être stocké sous une forme liquide, gazeuse, ou même solide à l'intérieur du compartiment 10.

Le réservoir 8 comporte également un deuxième compartiment 11 délimitant un volume creux pour le stockage de carburant formant une seule et même pièce avec le premier compartiment 10.

A cet effet, le réservoir 8 comporte une zone de jonction 14 étanche entre les deux compartiments 10, 11 pour garantir une séparation entre les contenus des deux compartiments 10, 11. Cette zone de jonction 14 pourra être obtenue par exemple par soudage par vibration de deux demi-coquilles creuses en matière plastique injectée correspondant aux deux compartiments 10, 11 du réservoir 8.

En outre, chaque compartiment 10, 11 intègre un module jauge-pompe 17, 18 comportant une jauge de niveau de remplissage de chaque compartiment 10, 11 et une pompe pour l'acheminement du contenu de chaque compartiment 10, 11 vers le dispositif (système SCR ou moteur) auquel est relié le compartiment correspondant. Le type du module 17, 18 est adapté bien entendu au contenu de chaque compartiment 10, 11.

Comme montré sur la figure 1, le compartiment 10 du réservoir 8 est disposé dans la zone avant 2 du plancher au moins partiellement dans une zone latérale 19 déformable en cas de choc du véhicule. Cette zone 19 correspond de préférence à la zone latérale déformable en cas de choc dit de "choc poteau". Par "zone déformable en cas de choc poteau", on entend la zone 19 qui est déformée lors d'un test de certification Euro NCAP au cours duquel la voiture testée est projetée latéralement à une vitesse de l'ordre de 30km/h contre un poteau rigide relativement étroit.

Cette zone 19 a la forme d'une bande longitudinale ayant un bord sensiblement confondu avec un bord longitudinal du plancher 1. Cette bande a une largeur L1 de l'ordre de 300mm et une longueur L2 s'étendant le long de toute la portière avant et de toute la portière arrière du véhicule. La longueur L2 dépend donc de la longueur de chaque type du véhicule.

Le deuxième compartiment 11 pour le stockage de carburant est situé également dans la zone avant 2 du plancher et majoritairement, de préférence complètement, à l'extérieur de la zone 19 afin de garantir la sécurité du réservoir 8 en cas de choc latéral du véhicule.

L'implantation du réservoir 8 sous le plancher avant 2, qui présente une longueur mesurée suivant l'axe X sensiblement constante d'un type de véhicule à l'autre, permet ainsi de supprimer la diversité de canalisations reliant le compartiment 10 au système SCR en cas d'utilisation d'une plateforme modulaire de véhicules à empattement variable. En outre, la disposition du réservoir 8 dans la zone latérale 19 permet d'augmenter d'environ six litres le volume du compartiment 10 de stockage de l'agent de dépollution en sorte qu'il est possible d'atteindre une autonomie d'environ 20000km avant le remplissage.

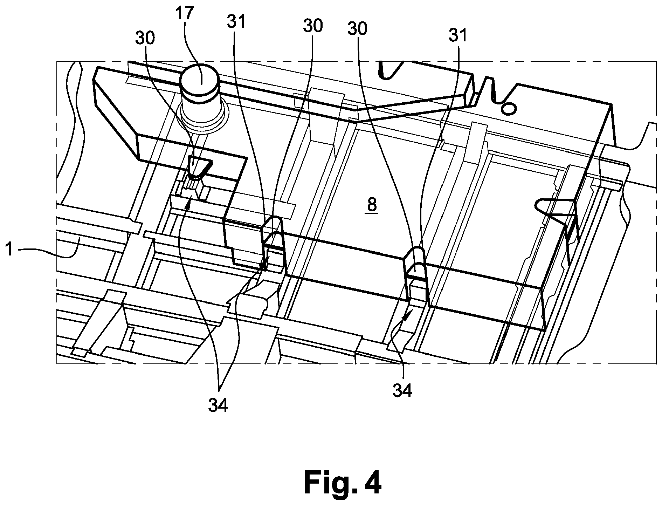

Par ailleurs, le réservoir 8 comporte des pattes de fixation 30 avec le plancher 1 du véhicule bien visibles sur les figures 2 et 4. Certaines pattes de fixation 30 sont positionnées dans des creux 31 ménagés dans le réservoir 8. Ces creux 31 qui génèrent une perte de volume sont disposés dans des endroits où il existe une contrainte d'espace imposée par le plancher 1. D'autres pattes de fixation 30 présentent une forme en saillie par rapport aux faces externes du réservoir 8 dans des endroits où il n'existe pas de contrainte d'espace imposée par le plancher 1 du véhicule. Ces pattes de fixation 30 sont destinées à coopérer avec des plots 34 visibles sur la figure 4 portés par le plancher 1 pour un assemblage par exemple par vissage par un opérateur.

Dans une variante de réalisation représentée sur la figure 3 qui montre également un berceau 37 de train avant, les compartiments de stockage d'agent de dépollution 10 et de carburant 11 prennent la forme de deux réservoirs indépendants séparés l'un de l'autre par un espace 38. Les deux réservoirs 10, 11 sont positionnés comme précédemment dans la zone avant 2 du plancher. Le réservoir 10 de stockage de l'agent de dépollution est positionné en partie dans la zone latérale 19; tandis que le réservoir 11 de carburant est positionné à l'extérieur de cette zone 19. Dans ce cas, l'espace 38 entre les deux réservoirs 10, 11 doit être suffisant pour que l'opérateur puisse réaliser les manoeuvres de fixation de ces éléments 10, 11 au plancher 1 du véhicule.

En conséquence, même si cette configuration permet d'augmenter la capacité du réservoir 10 de l'agent de dépollution du fait de l'occupation de la zone latérale 19, le gain de capacité n'est pas aussi important que dans le mode de réalisation de la figure 1 dans lequel la zone de jonction 14 entre les compartiments 10, 11 intégrés dans un même réservoir permet de supprimer l'espace de séparation 38.

## Revendications

1. Ensemble pour châssis de véhicule automobile comportant un plancher (1) ayant une zone avant (2) formée par une première partie (21) destinée à être située sous un siège d'un conducteur et un siège d'un passager avant du véhicule et une deuxième partie (22) destinée à être située sous des sièges de passagers arrière du véhicule, ainsi qu'un réservoir (8) comportant un premier compartiment (10) délimitant un volume creux pour le stockage d'un agent de dépollution, **caractérisé en ce que** ledit premier compartiment (10) du réservoir (8) est disposé dans la zone avant (2) du plancher au moins partiellement dans une zone latérale (19) déformable en cas de choc du véhicule.

2. Ensemble selon la revendication 1, **caractérisé en ce que** la zone latérale déformable (19) est une zone déformable en cas de choc poteau.

3. Ensemble selon la revendication 1 ou 2, **caractérisé en ce que** le réservoir (8) comporte également un deuxième compartiment (11) délimitant un volume creux pour le stockage de carburant formant une seule et même pièce avec le premier compartiment (10) de stockage.

4. Ensemble selon la revendication 3, **caractérisé en ce que** le deuxième compartiment (11) de stockage de carburant est positionné dans la zone avant (2) du plancher (1).

5. Ensemble selon la revendication 3 ou 4, **caractérisé en ce que** le deuxième compartiment (11) de stockage de carburant est positionné à l'extérieur de la zone latérale (19) déformable en cas de choc du véhicule.

6. Ensemble selon l'une des revendications 3 à 5, **caractérisé en ce que** le réservoir (8) comporte une zone de jonction (14) étanche entre les deux compartiments de stockage (10, 11) du réservoir (8).

7. Ensemble selon l'une des revendications 3 à 6, **caractérisé en ce que** chaque compartiment de stockage du réservoir (8) intègre un module jauge-pompe (17, 18).

8. Ensemble selon l'une des revendications 1 à 7, **caractérisé en ce que** le réservoir (8) comporte des pattes de fixation (30) avec le plancher (1) du véhicule automobile.

9. Ensemble selon la revendication 8, **caractérisé en ce que** les pattes de fixation (30) sont disposées dans des creux (31) ménagés dans le réservoir (8) dans des zones où il existe une contrainte d'espace imposée par le plancher (1) du véhicule.

10. Ensemble selon la revendication 8 ou 9, **caractérisé en ce que** les pattes de fixation (30) présentent une forme en saillie dans des zones où il n'existe pas de contrainte d'espace imposée par le plancher (1) du véhicule.

11. Véhicule automobile comportant un ensemble pour châssis selon l'une des revendications précédentes.

## Patentansprüche

1. Einheit für ein Kraftfahrzeug-Fahrgestell, ein Bodenblech (1) umfassend, das eine vordere Zone (2) aufweist, die durch einen ersten Abschnitt (21) gebildet wird, der dazu bestimmt ist, unter einem Sitz eines Lenkers und einem Sitz eines vorderen Passagiers des Fahrzeugs zu liegen, und einen zweiten Abschnitt (22), der dazu bestimmt ist, unter den hinteren Passagiersitzen des Fahrzeugs zu liegen, sowie einen Tank (8), ein erstes Fach (10) umfassend, der ein Hohlvolumen zum Lagern eines Dekontaminierungsmittels eingrenzt, **dadurch gekennzeichnet, dass** das besagte erste Fach (10) des Tanks (8) in der vorderen Zone (2) des Bodenblechs zumindest teilweise in einer seitlichen Zone (19) angeordnet ist, die im Falle eines Aufpralls des Fahrzeugs verformbar ist.

2. Einheit nach Anspruch 1, **dadurch gekennzeichnet, dass** die verformbare seitliche Zone (19) eine Zone ist, die im Falle eines Pfahlaufpralls verformbar ist.

3. Einheit nach Anspruch 1 oder 2, **dadurch gekennzeichnet, dass** der Tank (8) ebenfalls ein zweites Fach (11) umfasst, das ein Hohlvolumen zum Lagern von Treibstoff eingrenzt, das ein und dasselbe Stück mit dem ersten Fach (10) zum Lagern bildet.

4. Einheit nach Anspruch 3, **dadurch gekennzeichnet, dass** das zweite Fach (11) zum Lagern von Treibstoff in der vorderen Zone (2) des Bodenblechs (1) positioniert ist.

5. Einheit nach Anspruch 3 oder 4, **dadurch gekennzeichnet, dass** das zweite Fach (11) zum Lagern von Treibstoff außerhalb der seitlichen Zone (19) positioniert ist, die im Falle eines Aufpralls des Fahrzeugs verformbar ist.

6. Einheit nach einem der Ansprüche 3 bis 5, **dadurch gekennzeichnet, dass** der Tank (8) eine dichte Anschlusszone (14) zwischen den beiden Fächern zum Lagern (10, 11) des Tanks (8) umfasst.

7. Einheit nach einem der Ansprüche 3 bis 6, **dadurch gekennzeichnet, dass** jedes Fach zum Lagern des Tanks (8) ein Messstab-Pumpen-Modul (17, 18) integriert.

8. Einheit nach einem der Ansprüche 1 bis 7, **dadurch gekennzeichnet, dass** der Tank (8) Befestigungslaschen (30) mit dem Bodenblech (1) des Kraftfahrzeugs umfasst.

9. Einheit nach Anspruch 8, **dadurch gekennzeichnet, dass** die Befestigungslaschen (30) in den Hohlräumen (31) angeordnet sind, die im Tank (8) in den Zonen vorhanden sind, wo eine räumliche Beschränkung vorliegt, die durch das Bodenblech (1) des Fahrzeugs auferlegt ist.

10. Einheit nach Anspruch 8 oder 9, **dadurch gekennzeichnet, dass** die Befestigungslaschen (30) eine überstehende Form in den Zonen aufweisen, wo keine räumliche Beschränkung vorliegt, die durch das Bodenblech (1) des Fahrzeugs auferlegt ist.

11. Kraftfahrzeug, eine Einheit für ein Fahrgestell nach einem der vorstehenden Ansprüche umfassend.

## Claims

1. Framework assembly for motor vehicle including a floor (1) with a front zone (2) formed by a first part (21) destined to be situated under a driver's seat and a front passenger's seat of the vehicle and a second part (22) destined to be positioned under rear passenger seats of the vehicle, as well as a reservoir (8) including a first compartment (10) delimiting an empty space to store a pollutant removal agent, **characterised in that** the said first compartment (10) of the reservoir (8) is positioned in the front zone (2) of the floor at least partially in a lateral zone (19) deformable in case of shock of the vehicle.

2. Assembly according to claim 1, **characterised in that** the deformable lateral zone (19) is a deformable zone in case of pole shock.

3. Assembly according to claim 1 or 2, **characterised in that** the reservoir (8) also includes a second compartment (11) delimiting an empty space to store fuel forming a single part with the first storage compartment (10)

4. Assembly according to claim 3, **characterised in that** the second compartment (11) for fuel storage is positioned in the front zone (2) of the floor (1).

5. Assembly according to claim 3 or 4, **characterised in that** the second compartment (11) for fuel storage is positioned outside the lateral zone (19) deformable in case of shock.

6. Assembly according to one of the claims 3 to 5, **characterised in that** the reservoir (8) includes a sealed connection zone (14) between the two storage compartments (10, 11) of the reservoir (8).

7. Assembly according to claim 3 to 6, **characterised in that** each storage compartment in the reservoir (8) integrates a gauge-pump module (17,18).

8. Assembly according to one of the claims 1 to 7, **characterised in that** the reservoir (8) includes attachment lugs (30) with to the floor (1) of the motor vehicle.

9. Assembly according to claim 8, **characterised in that** the attachment lugs (30) are positioned in the hollow (31) arranged in the reservoir (8) in zones where there is limited space imposed by the floor (1) of the vehicle.

10. Assembly according to claim 8 or 9, **characterised in that** the attachment lugs (30) protrude into zones where there is no space restriction imposed by the floor (1) of the vehicle.

11. Motor vehicle including a framework assembly according to one of the preceding claims.
